# EUROPEAN PATENT SPECIFICATION

(11) **EP 4 072 924 B1**
(45) Date of publication and mention of the grant of the patent: **14.08.2024**
(21) Application number: 21700531.3
(22) Date of filing: 11.01.2021
(51) Int. Cl.: B62B 7/06, B62B 9/10

(54) **SUPPORT ANTI-BREAKING STRUCTURE AND STROLLER THEREWITH**
TRAGSTRUKTUR MIT BRUCHSCHUTZ UND KINDERWAGEN DAMIT
STRUCTURE ANTI-RUPTURE DE SUPPORT ET POUSSETTE LA COMPRENANT

(30) Priority: 13.01.2020 CN 202020067049 U
(43) Date of publication of application: 19.10.2022
(73) Proprietor: Wonderland Switzerland AG, 6312 Steinhausen (CH)
(72) Inventor: HU, Shoufeng, Dongguan, Guangdong 523648 (CN); WANG, Erxue, Dongguan, Guangdong 523648 (CN); GUO, Zhengwen, Dongguan, Guangdong 523648 (CN)
(74) Representative: Kretschmann, Dennis
(86) International application number: PCT/EP2021/050387
(87) International publication number: WO 2021/144224

(56) References cited:
- EP-A1- 1 442 956
- FR-A1- 2 551 013
- JP-A- 2016 193 653

## Description

### Field of the Invention

The present invention relates to a support anti-breaking structure and a stroller therewith according to the pre-characterizing clauses of claims 1 and 12.

### Background of the Invention

A stroller is designed to provide convenience for babies' outdoor activities. The stroller includes a stroller frame and a support part connected to the stroller frame, and the support part is used for the baby to ride. The support part usually includes a support member and a protective cover sleeved on the support member. The support member includes a headrest plate for the baby's head to rest against, a backrest plate for the baby's back to rest against, a seat plate for supporting the baby, and a leg rest plate for the baby's legs to rest against. The headrest plate is pivotally connected to the backrest plate, the backrest plate is pivotally connected to the seat plate, and the seat plate is pivotally connected to the leg rest plate. But rotation and folding of the headrest plate relative to the backrest plate, the backrest plate relative to the seat plate, and the leg rest plate relative to the seat plate are only possibly in one direction. If the rotation and folding are operated in the opposite direction by mistake, pivotal connections between the plates might break, so that relative sliding movements might occur between the headrest plate and the backrest plate, between the backrest plate and the seat plate, and between the seat plate and the leg rest plate, which causes a malfunction of the stroller and affects the normal use for the baby.

EP 1442 956 A1 discloses a seat core that is a sheet of flat plate formed of a synthetic resin comprising a head guard surface portion, a backrest surface portion, a seating surface portion, and a leg-supporting surface portion. The backrest surface portion is connected to the seating surface portion through a first hinge portion which is thinned by reducing a thickness of the resin. Similarly, the seating surface portion is connected to the leg-supporting surface portion by means of a second hinge portion, which is again thinned by reducing a thickness of the resin. The backrest surface portion is connected to the head guard surface portion by means of a third hinge portion, which is again thinned by reducing a thickness of the resin.

JP 2016-193653 A discloses a seat restrictor for a stroller. The seat comprises side wall portions arranged on the left and right sides of a seat portion of the stroller. A lower edge portion and a back edge portion of a sidewall portion of the seat are connected by means of both a belt-like member and an elastic member. This configuration helps ensuring that the sidewall portion is folded inwardly when the stroller is folded.

A frame structure for a foldable baby carriage bed is disclosed in FR 2 551 013.

Therefore, there is an urgent need for developing an anti-breaking structure for the support member of the stroller that can effectively reduce the probability of breaking the pivotal connections when the rotation and folding is incorrectly operated.

### Summary of the Invention

This is mind, the present invention aims at providing a support anti-breaking structure which can effectively reduce the probability of breaking the pivotal connections due to incorrect operation of the rotation and folding, and a stroller therewith.

This is achieved by a support anti-breaking structure and a stroller according to claims 1 and 12. The dependent claims pertain to corresponding further developments and improvements.

As will be seen more clearly from the detail description following below, the claimed support anti-breaking structure includes a first plate member, a second plate member and a first fixing member. An end of the first plate member is pivotally connected to an end of the second plate member at a first pivotal connection. The first fixing member is formed by a flexible structure, and the first fixing member is fixed to a side of the first pivotal connection.

According to the present invention, the first fixing member is made of sponge material.

According to an embodiment of the present invention, the first plate member is a backrest portion for a baby's back to rest against.

According to an embodiment of the present invention, the second plate member is a seat portion for allowing a baby to sit on.

According to an embodiment of the present invention, the support anti-breaking structure further includes a third plate member pivotally connected to another end of the first plate member at a second pivotal connection.

According to an embodiment of the present invention, the support anti-breaking structure further comprises a second fixing member formed by a flexible structure, and the second fixing member is fixed to a side of the second pivotal connection.

According to an embodiment of the present invention, the second fixing member is a tape or made of sponge material.

According to an embodiment of the present invention, the third plate member is a headrest portion for a baby's head to rest against.

According to an embodiment of the present invention, the support anti-breaking structure further includes a fourth plate member pivotally connected to another end of the second plate member at a third pivotal connection.

According to an embodiment of the present invention, the support anti-breaking structure further includes a third fixing member formed by a flexible structure, and the third fixing member is fixed to a side of the third pivotal connection.

According to an embodiment of the present invention, the third fixing member is a tape or made of sponge material.

According to an embodiment of the present invention, the fourth plate member is a leg rest portion for a baby's legs to rest against.

Furthermore, the claimed stroller includes a stroller frame, a protective cover and the support anti-breaking structure. The protective cover covers the support anti-breaking structure and is connected to the stroller frame.

In summary, the stroller includes the support anti-breaking structure for supporting the baby. By disposal of the fixing members formed by the flexible structure and fixed to the pivotal connections where the plate members are pivotally connected, the plate members can press the corresponding fixing member, so that the plate members can be rotatably folded in a direction of pressing the corresponding fixing member. When one plate member rotates relative to another plate member in the direction of pulling the corresponding fixing member, the corresponding fixing member will exert a reaction force to the plate members by the structural strength of the corresponding fixing member, thereby restraining the rotation of the one plate member relative to the another plate member in the direction of pulling the corresponding fixing member, so as to effectively reduce the probability of breaking the pivotal connections due to incorrect operation of the rotation and folding, which can ensure the normal use of the stroller.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof
FIG. 1 is a diagram of a stroller according to an embodiment of the present invention,
FIG. 2 is a diagram of the folded stroller according to the embodiment of the present invention,
FIG. 3 and FIG. 4 are diagrams of a support anti-breaking structure at different views according to the embodiment of the present invention, and
FIG. 5 is a diagram of the adjusted support anti-breaking structure according to the embodiment of the present invention.

### Detailed Description

In order to illustrate technical specifications and structural features as well as achieved purposes and effects of the present invention, relevant embodiments and figures are described as follows.

In the following detailed description of the preferred embodiments, reference is made to the accompanying drawings which form a part hereof, and in which is shown by way of illustration specific embodiments in which the invention may be practiced. In this regard, directional terminology, such as "top," "bottom," "front," "back," etc., is used with reference to the orientation of the Figure(s) being described. The members of the present invention can be positioned in a number of different orientations. As such, the directional terminology is used for purposes of illustration and is in no way limiting. Accordingly, the drawings and descriptions will be regarded as illustrative in nature and not as restrictive.

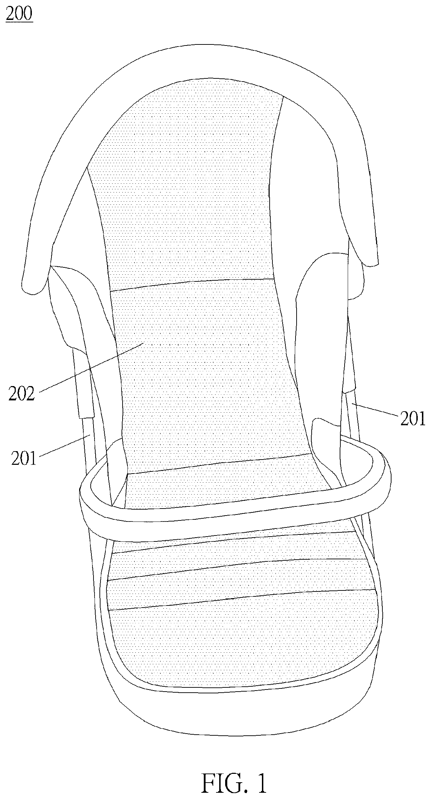

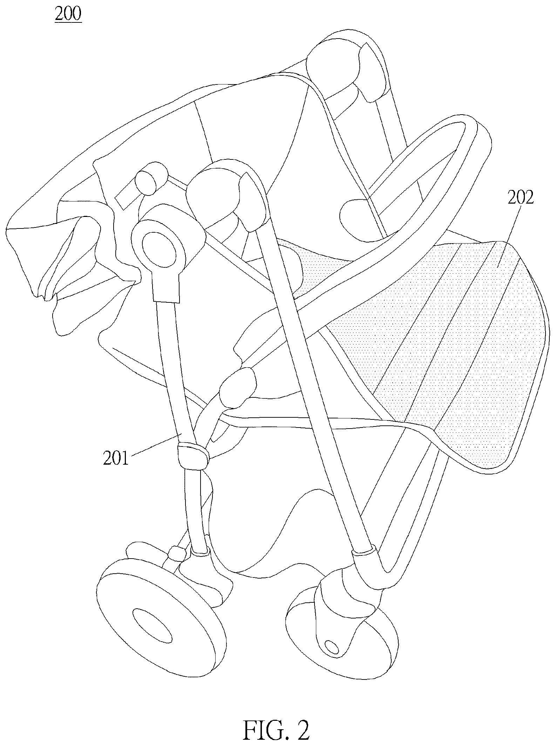

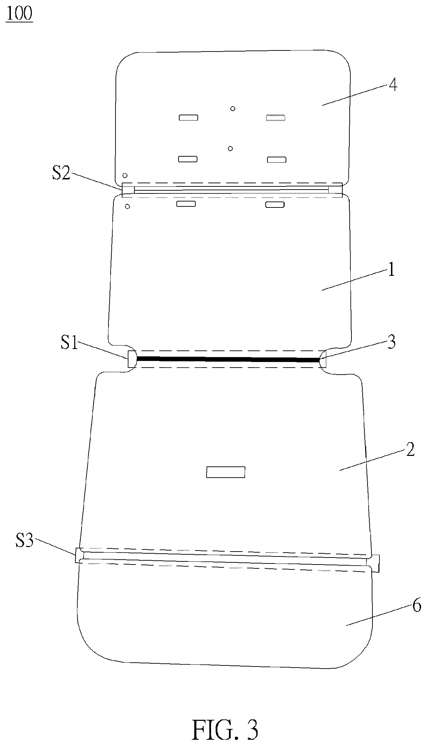

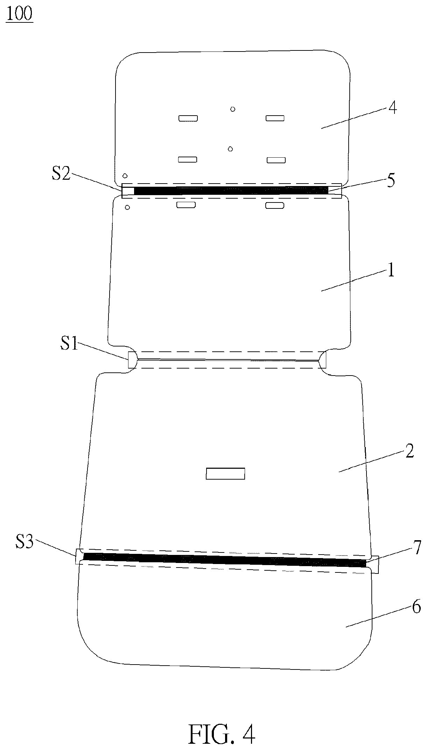

Please refer to FIG. 1 to FIG. 4. FIG. 1 is a diagram of a stroller 200 according to an embodiment of the present invention. FIG. 2 is a diagram of the folded stroller 200 according to the embodiment of the present invention. FIG. 3 and FIG. 4 are diagrams of a support anti-breaking structure 100 at different views according to the embodiment of the present invention. The stroller 200 includes a stroller frame 201, a protective cover 202 and the support anti-breaking structure 100. The protective cover 202 is sleeved on the support anti-breaking structure 100 and connected to the stroller frame 201. Specifically, the protective cover 202 covers the support anti-breaking structure 100, and the protective cover 202 is sleeved on the stroller frame 201.

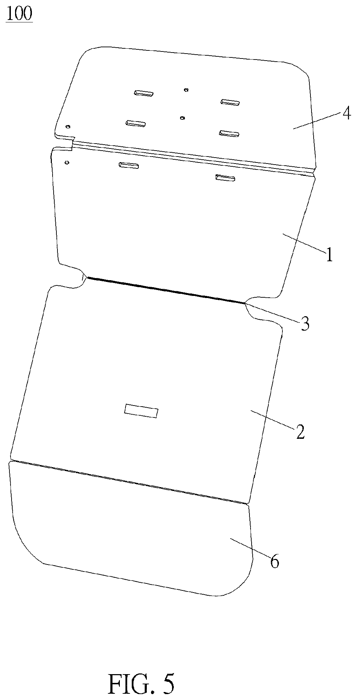

Please refer to FIG. 3 to FIG. 5. FIG. 5 is a diagram of the adjusted support anti-breaking structure 100 according to the embodiment of the present invention. The support anti-breaking structure 100 includes a first plate member 1, a second plate member 2 and a first fixing member 3. An end of the first plate member 1 is pivotally connected to an end of the second plate member 2 at a first pivotal connection S1. In this embodiment, the first plate member 1 can be a backrest portion for a baby's back to rest against, the second plate member 2 can be a seat portion for allowing a baby to sit on, but is not limited to it. The first fixing member 3 is formed by a flexible structure, so that the first fixing member 3 can be pressed to be deformed. The first fixing member 3 is fixed to a side of the first pivotal connection S₁. The first fixing member 3 is used to restrain the first plate member 1 from rotating relative to the second plate member 2 in a direction of pulling the first fixing member 3. The first fixing member 3 is pressed by the first plate member 1 and the second plate member 2, so that the first plate member 1 and the second plate member 2 can be rotatably folded. When the first plate member 1 rotates relative to the second plate member 2 in the direction of pulling the first fixing member 3, the first fixing member 3 will exert a reaction force to the first plate member 1 and the second plate member 2 by structural strength of the first fixing member 3, thereby restraining rotation of the first plate member 1 relative to the second plate member 2, so as to effectively reduce the probability of breaking the first pivotal connection S₁ due to incorrect operation of the rotation and folding. In this embodiment, the first fixing member 3 can be a tape, but is not limited to it. For example, the first fixing member 3 also can be made of sponge material.

The support anti-breaking structure 100 further includes a third plate member 4 pivotally connected to another end of the first plate member 1 at a second pivotal connection S₂. In this embodiment, the third plate member 4 can be a headrest portion for a baby's head to rest against, but is not limited to it. Furthermore, the support anti-breaking structure 100 further includes a second fixing member 5 formed by a flexible structure, so that the second fixing member 5 can be pressed to be deformed. The second fixing member 5 is fixed to a side of the second pivotal connection S₂. The second fixing member 5 is used to restrain the third plate member 4 from rotating relative to the first plate member 1 in a direction of pulling the second fixing member 5. The second fixing member 5 is pressed by the third plate member 4 and the first plate member 1, so that the third plate member 4 and the first plate member 1 can be rotatably folded. When the third plate member 4 rotates relative to the first plate member 1 in the direction of pulling the second fixing member 5, the second fixing member 5 will exert a reaction force to the third plate member 4 and the first plate member 1 by structural strength of the second fixing member 5, thereby restraining rotation of the third plate member 4 relative to the first plate member 1, so as to effectively reduce the probability of breaking the second pivotal connection S₂ due to incorrect operation of the rotation and folding. In this embodiment, the second fixing member 5 can be a tape, but is not limited to it. For example, the second fixing member 5 also can be made of sponge material.

The support anti-breaking structure 100 further includes a fourth plate member 6 pivotally connected to another end of the second plate member 2 at a third pivotal connection S₃. In this embodiment, the fourth plate member 6 can be a leg rest portion for a baby's legs to rest against, but is not limited to it. Furthermore, the support anti-breaking structure 1000 further includes a third fixing member 7 formed by a flexible structure, so that the third fixing member 7 can be pressed to be deformed. The third fixing member 7 is fixed to a side of the third pivotal connection S₃. The third fixing member 7 is used to restrain the fourth plate member 6 from rotating relative to the second plate member 2 in a direction of pulling the third fixing member 7. The third fixing member 7 is pressed by the fourth plate member 6 and the second plate member 2, so that the fourth plate member 6 and the second plate member 2 can be rotatably folded. When the fourth plate member 6 rotates relative to the second plate member 2 in the direction of pulling the third fixing member 7, the third fixing member 7 will exert a reaction force to the fourth plate member 6 and the second plate member 2 by structural strength of the third fixing member 7, thereby restraining rotation of the fourth plate member 6 relative to the second plate member 2, so as to effectively reduce the probability of breaking the third pivotal connection S₃ due to incorrect operation of the rotation and folding. In this embodiment, the third fixing member 7 can be a tape, but is not limited to it. For example, the third fixing member 7 also can be made of sponge material.

In conclusion, the stroller 200 includes the support anti-breaking structure 100 for supporting the baby. By disposal of the first fixing member 3 formed by the flexible structure and fixed to the side of the first pivotal connection S₁ where the first plate member 1 and the second plate member 2 are pivotally connected, the first plate member 1 and the second plate member 2 can press the first fixing member 3, so that the first plate member 1 and the second plate member 2 can be rotatably folded in a direction of pressing the first fixing member 3. When the first plate member 1 rotates relative to the second plate member 2 in the direction of pulling the first fixing member 3, the first fixing member 3 will exert the reaction force to the first plate member 1 and the second plate member 2 by the structural strength of the first fixing member 3, thereby restraining the rotation of the first plate member 1 relative to the second plate member 2 in the direction of pulling the first fixing member 3, so as to effectively reduce the probability of breaking the first pivotal connection S₁ due to incorrect operation of the rotation and folding, which can ensure the normal use of the stroller 200.

Besides, by disposal of the second fixing member 5 formed by the flexible structure and fixed to the side of the second pivotal connection S₂ where the third plate member 4 and the first plate member 1 are pivotally connected, the third plate member 4 and the first plate member 1 can press the second fixing member 5, so that the third plate member 4 and the first plate member 1 can be rotatably folded in a direction of pressing the second fixing member 5. When the third plate member 4 rotates relative to the first plate member 1 in the direction of pulling the second fixing member 5, the second fixing member 5 will exert the reaction force to the third plate member 4 and the first plate member 1 by the structural strength of the second fixing member 5, thereby restraining the rotation of the third plate member 4 relative to the first plate member 1 in the direction of pulling the second fixing member 5, so as to effectively reduce the probability of breaking the second pivotal connection S₂ due to incorrect operation of the rotation and folding, which can ensure the normal use of the stroller 200.

Furthermore, by disposal of the third fixing member 7 formed by the flexible structure and fixed to the side of the third pivotal connection S₃ where the fourth plate member 6 and the second plate member 2 are pivotally connected, the fourth plate member 6 and the second plate member 2 can press the third fixing member 7, so that the fourth plate member 6 and the second plate member 2 can be rotatably folded in a direction of pressing the third fixing member 7. When the fourth plate member 6 rotates relative to the second plate member 2 in the direction of pulling the third fixing member 7, the third fixing member 7 will exert the reaction force to the fourth plate member 6 and the second plate member 2 by the structural strength of the third fixing member 7, thereby restraining the rotation of the fourth plate member 6 relative to the second plate member 2 in the direction of pulling the third fixing member 7, so as to effectively reduce the probability of breaking the third pivotal connection S3 due to incorrect operation of the rotation and folding, which can ensure the normal use of the stroller 200.

In contrast to the prior art, the stroller of the present invention includes the support anti-breaking structure for supporting the baby. By disposal of the fixing members formed by the flexible structure and fixed to the pivotal connections where the plate members are pivotally connected, the plate members can press the corresponding fixing member, so that the plate members can be rotatably folded in a direction of pressing the corresponding fixing member. When one plate member rotates relative to another plate member in the direction of pulling the corresponding fixing member, the corresponding fixing member will exert the reaction force to the plate members by the structural strength of the corresponding fixing member, thereby restraining the rotation of the one plate member relative to the another plate member in the direction of pulling the corresponding fixing member, so as to effectively reduce the probability of breaking the pivotal connections due to incorrect operation of the rotation and folding, which can ensure the normal use of the stroller.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A support anti-breaking structure (100) comprising:
a first plate member (1);
a second plate member (2), an end of the first plate member (1) being pivotally connected to an end of the second plate member (2) at a first pivotal connection (S₁); and
a first fixing member (3) formed by a flexible structure, the first fixing member (3) being fixed to a side of the first pivotal connection (S1);**characterized in that** the first fixing member (3) is made of sponge material.

2. The support anti-breaking structure (100) of claim 1, **characterized in that** the first plate member (1) is a backrest portion for a baby's back to rest against.

3. The support anti-breaking structure (100) of claim 1 or 2, **characterized in that** the second plate member (2) is a seat portion for allowing a baby to sit on.

4. The support anti-breaking structure (100) of any one of claims 1 to 3, **characterized by** a third plate member (4) pivotally connected to another end of the first plate member (1) at a second pivotal connection (S₂).

5. The support anti-breaking structure (100) of claim 4, **characterized by** a second fixing member (5) formed by a flexible structure, the second fixing member (5) being fixed to a side of the second pivotal connection (S₂).

6. The support anti-breaking structure (100) of claim 5, **characterized in that** the second fixing member (5) is a tape or made of sponge material.

7. The support anti-breaking structure (100) of any one of claims 4 to 6, **characterized in that** the third plate member (4) is a headrest portion for a baby's head to rest against.

8. The support anti-breaking structure (100) of any one of claims 1 to 7, **characterized by** a fourth plate member (6) pivotally connected to another end of the second plate member (2) at a third pivotal connection (S₃).

9. The support anti-breaking structure (100) of claim 8, **characterized by** a third fixing member (7) formed by a flexible structure, the third fixing member (7) being fixed to a side of the third pivotal connection (S3).

10. The support anti-breaking structure (100) of claim 9, **characterized in that** the third fixing member (7) is a tape or made of sponge material.

11. The support anti-breaking structure (100) of any one of claims 8 to 10, **characterized in that** the fourth plate member (6) is a leg rest portion for a baby's legs to rest against.

12. A stroller (200) comprising a stroller frame (201) and a protective cover (202), and **characterized by** the support anti-breaking structure (100) of any one of claims 1 to 11, and the protective cover (202) covering the support anti-breaking structure (100) and being connected to the stroller frame (201).

## Patentansprüche

1. Bruchfeste Trägerstruktur (100), umfassend:
ein erstes Plattenelement (1);
ein zweites Plattenelement (2), wobei ein Ende des ersten Plattenelements (1) schwenkbar mit einem Ende des zweiten Plattenelements (2) an einer ersten Schwenkverbindung (S1) verbunden ist; und
ein erstes Befestigungselement (3), das durch eine flexible Struktur gebildet ist, wobei das erste Befestigungselement (3) an einer Seite der ersten Schwenkverbindung (S1) befestigt ist;
**dadurch gekennzeichnet, dass** das erste Befestigungselement (3) aus Schwammmaterial hergestellt ist.

2. Bruchfeste Trägerstruktur (100) nach Anspruch 1, **dadurch gekennzeichnet, dass** das erste Plattenelement (1) ein Rückenlehnenteil ist, an dem der Rücken eines Babys anliegen kann.

3. Bruchfeste Trägerstruktur (100) nach Anspruch 1 oder 2, **dadurch gekennzeichnet, dass** das zweite Plattenelement (2) ein Sitzteil ist, auf dem ein Baby sitzen kann.

4. Bruchfeste Trägerstruktur (100) nach einem der Ansprüche 1 bis 3, **gekennzeichnet durch** ein drittes Plattenelement (4), das mit einem anderen Ende des ersten Plattenelements (1) an einer zweiten Schwenkverbindung (S2) schwenkbar verbunden ist.

5. Bruchfeste Trägerstruktur (100) nach Anspruch 4, **gekennzeichnet durch** ein zweites Befestigungselement (5), das aus einer flexiblen Struktur gebildet ist, wobei das zweite Befestigungselement (5) an einer Seite der zweiten Schwenkverbindung (S2) befestigt ist.

6. Bruchfeste Trägerstruktur (100) nach Anspruch 5, **dadurch gekennzeichnet, dass** das zweite Befestigungselement (5) ein Band ist oder aus Schwamm-Material besteht.

7. Bruchfeste Trägerstruktur (100) nach einem der Ansprüche 4 bis 6, **dadurch gekennzeichnet, dass** das dritte Plattenelement (4) ein Kopfstützteil ist, an dem der Kopf eines Babys anliegen kann.

8. Bruchfeste Trägerstruktur (100) nach einem der Ansprüche 1 bis 7, **gekennzeichnet durch** ein viertes Plattenelement (6), das mit einem anderen Ende des zweiten Plattenelements (2) an einer dritten Schwenkverbindung (S3) schwenkbar verbunden ist.

9. Bruchfeste Trägerstruktur (100) nach Anspruch 8, **gekennzeichnet durch** ein drittes Befestigungselement (7), das aus einer flexiblen Struktur besteht, wobei das dritte Befestigungselement (7) an einer Seite der dritten Schwenkverbindung (S3) befestigt ist.

10. Bruchfeste Trägerstruktur (100) nach Anspruch 9, **dadurch gekennzeichnet, dass** das dritte Befestigungselement (7) ein Band ist oder aus Schwamm-Material besteht.

11. Bruchfeste Trägerstruktur (100) nach einem der Ansprüche 8 bis 10, **dadurch gekennzeichnet, dass** das vierte Plattenelement (6) ein Beinauflageteil ist, an dem die Beine eines Babys anliegen können.

12. Kinderwagen (200) mit einem Kinderwagenrahmen (201) und einer Schutzabdeckung (202), **gekennzeichnet durch** die bruchfeste Trägerstruktur (100) nach einem der Ansprüche 1 bis 11, wobei die Schutzabdeckung (202) die bruchfeste Trägerstruktur (100) abdeckt und mit dem Kinderwagenrahmen (201) verbunden ist.

## Revendications

1. Structure anti-rupture de support (100) comprenant :
un premier élément de plaque (1) ;
un second élément de plaque (2), une extrémité du premier élément de plaque (1) étant raccordée, de manière pivotante, à une extrémité du second élément de plaque (2) au niveau d'un premier raccordement pivotant (S1) ; et
un premier élément de fixation (3) formé par une structure flexible, le premier élément de fixation (3) étant fixé à un côté du premier raccordement pivotant (S1) ; **caractérisé en ce que** le premier élément de fixation (3) est réalisé avec un matériau spongieux.

2. Structure anti-rupture de support (100) selon la revendication 1, **caractérisée en ce que** le premier élément de plaque (1) est une partie de dossier pour que le dos d'un bébé s'appuie contre cette dernière.

3. Structure anti-rupture de support (100) selon la revendication 1 ou 2, **caractérisée en ce que** le deuxième élément de plaque (2) est une partie de siège pour permettre à un bébé de s'assoir sur cette dernière.

4. Structure anti-rupture de support (100) selon l'une quelconque des revendications 1 à 3, **caractérisée en ce qu'**un troisième élément de plaque (4) raccordé, de manière pivotante, à une autre extrémité du premier élément de plaque (1) au niveau d'un deuxième raccordement pivotant (S2).

5. Structure anti-rupture de support (100) selon la revendication 4, **caractérisée par** un deuxième élément de fixation (5) formé par une structure flexible, le deuxième élément de fixation (5) étant fixé sur un côté du deuxième raccordement pivotant (S2).

6. Structure anti-rupture de support (100) selon la revendication 5, **caractérisée en ce que** le deuxième élément de fixation (5) est une bande ou est réalisé à partir d'un matériau spongieux.

7. Structure anti-rupture de support (100) selon l'une quelconque des revendications 4 à 6, **caractérisée en ce que** le troisième élément de plaque (4) est une partie d'appui-tête pour que la tête du bébé s'appuie contre cette dernière.

8. Structure anti-rupture de support (100) selon l'une quelconque des revendications 1 à 7, **caractérisée par** un quatrième élément de plaque (6) raccordé, de manière pivotante, à une autre extrémité du deuxième élément de plaque (2) au niveau d'un troisième raccordement pivotant (S3).

9. Structure anti-rupture de support (100) selon la revendication 8, **caractérisée par** un troisième élément de fixation (7) formé par une structure flexible, le troisième élément de fixation (7) étant fixé sur un côté du troisième raccordement pivotant (S3).

10. Structure anti-rupture de support (100) selon la revendication 9, **caractérisée en ce que** le troisième élément de fixation (7) est une bande ou est réalisé avec un matériau spongieux.

11. Structure anti-rupture de support (100) selon l'une quelconque des revendications 8 à 10, **caractérisée en ce que** le quatrième élément de plaque (6) est une partie de support pour les jambes pour que les jambes du bébé s'appuient sur cette dernière.

12. Poussette (200) comprenant un cadre de poussette (201) et une couverture de protection (202), et **caractérisée par** la structure anti-rupture de support (100) selon l'une quelconque des revendications 1 à 11, et la couverture de protection (202) recouvrant la structure anti-rupture de support (100) et étant raccordée au cadre de poussette (201).
